# FASCICULE DE BREVET EUROPEEN

(11) **EP 0 710 372 B1**
(45) Date de publication et mention de la délivrance du brevet: **12.03.1997**
(21) Numéro de dépôt: 94922282.2
(22) Date de dépôt: 20.07.1994
(51) Int. Cl.: G05D 1/00, B64C 13/04

(54) **DISPOSITIF DE COMMANDE A MANCHE DE PILOTAGE, NOTAMMENT MINI-MANCHE ASSERVI POUR AERONEF**
STEUERVORRICHTUNG MIT STEUERKNÜPPEL INSBESONDERE MINIKNÜPPEL ZUM STEUERN EINES LUFTFAHRZEUGES
CONTROL DEVICE WITH A CONTROL STICK, PARTICULARLY A SERVO SIDESTICK FOR AIRCRAFT

(30) Priorité: 22.07.1993 FR 9309035
(43) Date de publication de la demande: 08.05.1996
(73) Titulaire: RATIER-FIGEAC, Société dite:, F-46100 Figeac (FR)
(72) Inventeur: BERTHET, Jean-Louis, F-46100 Figeac (FR); BONDIVENNE, Eric, F-12300 Decazeville (FR)
(74) Mandataire: Bertrand, Didier
(86) Numéro de dépôt international: FR9400908
(87) Numéro de publication internationale: WO9503566

(56) Documents cités:
- EP-A- 0 179 209
- EP-A- 0 401 079
- US-A- 4 500 967

## Description

L'invention concerne les dispositifs de commande à manche de pilotage se déplaçant suivant au moins un degré de liberté, généralement en translation le long d'un axe ou plus fréquemment encore en pivotement sur un axe de rotation. Ce déplacement peut se combiner avec d'autres déplacements selon d'autres axes, agissant sur d'autres commandes. Il peut s'agir bien évidemment des manches de pilotage des aéronefs, mais aussi des manipulateurs de conduite de véhicules divers, des leviers de commande d'engins ou de jeux.

A la commande mécanique réalisée par les manches de pilotage s'est substituée généralement la commande électrique, ce qui a permis en supprimant les chaînes cinématiques directement associées aux manches la création des mini-manches.

Du fait de la commande électrique, l'effort mécanique résistant de la timonerie et des organes commandés (par exemple gouverne d'avion) n'est plus ressenti par l'utilisateur sur le manche et il est apparu utile de restituer une sensation artificielle d'effort résistant sur le manche.

On a pu proposer divers dispositifs de rappel mécanique, par exemple par ressorts. Le document FR-A-2 647 922 fait connaître un dispositif dans lequel le déplacement du manche détermine un effort résistant au moyen d'un actionneur électromécanique commandé en fonction d'une loi déplacement/effort prédéterminée.

L'objet de l'invention est de proposer un nouveau dispositif de commande s'appliquant aux manches de pilotage dans lesquels une commande s'exerce grâce au déplacement du manche selon au moins un degré de liberté (pivotement ou translation), le dispositif comportant un capteur d'effort (4,6) pour mesurer l'effort exercé par l'utilisateur sur le manche (1), et fournir cette information à un calculateur (18), des moyens étant prévus pour restituer sur le manche une sensation d'effort s'opposant à l'effort exercé par l'utilisateur, caractérisé en ce que :
* le déplacement (pivotement ou translation) du manche est assuré par un actionneur irréversible commandé par un calculateur,
* un capteur de position fournit au calculateur une recopie de la position effective du manche,
* le calculateur commande le fonctionnement de l'actionneur et donc le déplacement du manche et asservit la position de l'actionneur et du manche en fonction desdites informations d'effort et position grâce à une loi effort/position introduite dans le calculateur.

Du fait que l'actionneur est irréversible, il s'oppose au mouvement du manche sous l'effort de l'utilisateur. La mesure de cet effort, transformée par le capteur d'effort en un signal convenable et convertie dans le calculateur selon la loi préétablie effort/-position du manche, permet de commander l'actionneur pour déplacer le manche dans la position devant correspondre à l'effort exercé.

Naturellement, cette décomposition en étapes successives est en fait très serrée dans le temps, et l'utilisateur a la sensation que le manche se déplace sous l'effort, et réagit en opposant un effort résistant, à la manière d'un système visco-élastique.

Par capteur de position, on entend un organe donnant une information représentative de la position du manche, sans que cet organe soit nécessairement un composant spécifique : il peut notamment être intégré dans la chaîne cinématique amont.

Le capteur de position du manche ci-dessus, ou un autre capteur indépendant, peut être utilisé pour délivrer le signal de pilotage.

La mesure de l'effort sur le manche peut également être utilisée pour commander le pilotage du véhicule ou de l'engin. De la sorte, même si l'actionneur ne pouvait fonctionner pour une raison quelconque et que le manche restait bloqué dans une position quelconque, le pilotage resterait possible par la simple variation des efforts sur le manche.

Naturellement, l'invention peut s'appliquer à la gestion asservie du mouvement selon deux axes de rotation ou plusieurs axes de translation et non un seul, découplés et indépendants, avec des asservissements qui peuvent être différents.

De façon préférée, la mesure de l'effort sur le manche passe par la mesure d'une déformation ou d'un déplacement d'un dispositif élastique déformable interposé entre le manche et l'actionneur, notamment une lame élastique. Par exemple, la lame élastique est solidaire, à une extrémité, du manche et à son autre extrémité, elle est reliée à l'actionneur par une articulation.

La mesure de l'effort grâce aux déformations de la lame flexible permet d'observer des déplacements plus grands (de l'ordre de 10⁻² à 1 mm) que ceux que mesureraient d'autres systèmes de capteurs d'effort, par exemple à jauges de contraintes (microdéplacements de l'ordre de 10⁻⁵ mm à 10⁻³ mm). Les déplacements associés du manche restent suffisamment faibles (inférieurs à 1 degré) pour ne pas perturber la perception physiologique de l'utilisateur à la poignée.

Ceci permet d'utiliser pour la mesure des déplacements des capteurs linéaires ou rotatifs, inductifs ou résistifs, dont la fiabilité, la fidélité et la stabilité en fonction du temps, de la température et de l'environnement sont bien meilleures que pour les capteurs de type extensomètrique ou pièzo-électriques. La sécurité du fonctionnement est donc nettement accrue.

Le principe de la mesure de l'effort exercé sur un manche de pilotage est bien sûr connu en soi, par exemple par le document US-A-4 607 202. Mais il s'agit alors d'un manche de pilotage mécanique et non électrique, et la mesure de l'effort a pour but de compenser les perturbations dues aux accélérations des masses inertielles, mais non de permettre un asservissement du manche en position grâce à un actionneur irréversible.

Le capteur est disposé rigidement solidaire de l'actionneur ou du manche lui-même, par exemple sur un prolongement parallèle à la lame. La recopie de position est avantageusement disposée de façon à ne pas être perturbée par la déformation élastique du capteur d'effort.

L'actionneur électromécanique irréversible peut être un vérin linéaire à vis, dont le corps et la tige sont articulés respectivement au châssis du dispositif et au manche.

La position du manche peut être contrôlée par le calculateur grâce au capteur de position du manche, par exemple placé en parallèle sur l'actionneur ou intégré à celui-ci.

Naturellement, on peut prévoir des systèmes redondants de mesure et de calcul pour améliorer encore la sécurité.

De plus, il est avantageux d'introduire des possibilités de variation de la loi effort/position paramétrée dans le calculateur, permettant son adaptation à l'ergonomie de pilotage et sa modification en temps réel en fonction de la configuration des systèmes pilotés.

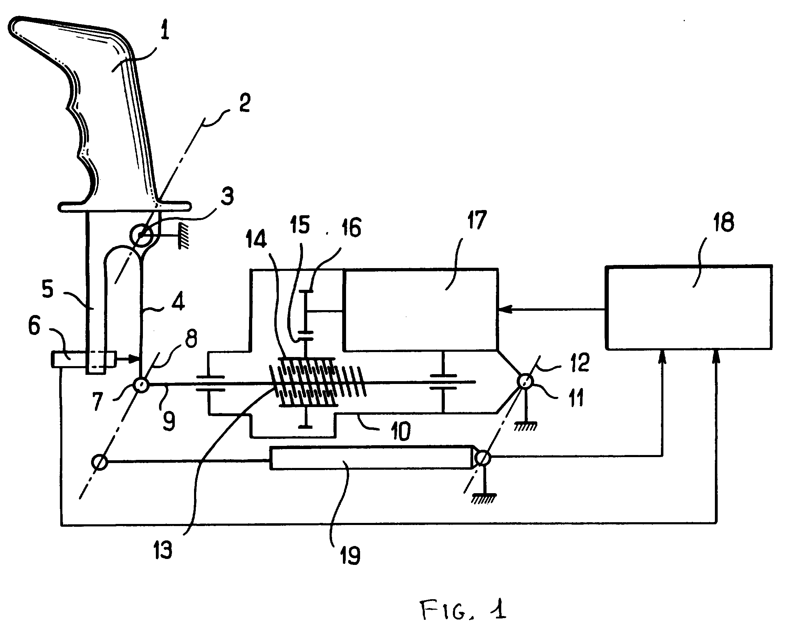

D'autres caractéristiques et avantages de l'invention ressortiront de la description suivante d'un exemple de réalisation dans le cas d'un système de commande à un seul axe de rotation. On se référera à la figure unique annexée représentant de façon schématique le système.

Le mini-manche 1 pivote dans un plan autour d'un axe de rotation transversal 2 grâce à une articulation 3 seulement esquissée sur la figure. Il est entendu qu'on s'intéresse ici à la rotation autour d'un seul axe en vue de réaliser l'asservissement de ce mouvement ; le mini-manche 1 peut aussi pivoter autour d'un second axe orthogonal à l'axe 2 grâce à une seconde articulation non représentée, par exemple interposée entre le mini-manche 1 et l'articulation 3.

Solidaires du mini-manche 1 dans son mouvement de pivotement principal et de préférence orthogonaux à l'axe de rotation, sont prévus d'une part un premier prolongement constitué par une lame flexible 4, et un second prolongement rigide 5 parallèle au premier servant de support à un capteur de déplacement 6, par exemple un palpeur avec ou sans contact, permettant de mesurer le déplacement relatif entre la lame flexible 4 et le prolongement rigide 5.

L'extrémité de la lame flexible 4 est liée, au travers d'une articulation 7 lui permettant de pivoter autour d'un axe 8 parallèle à l'axe de rotation 2, à l'extrémité de la tige 9 d'un vérin linéaire à vis 10.

Le corps du vérin 10 est lui-même articulé à son extrémité arrière 11, fixe par rapport au châssis, sur un axe de rotation 12 parallèle à l'axe 8.

La tige 9 coulisse dans le corps du vérin 10 en étant entraînée grâce à la coopération des filets 13, 14 et de pignons 15, 16 reliés cinématiquement à un moteur 17.

Ce dernier est commandé par un calculateur 18 numérique ou analogique.

Monté en parallèle entre les articulations 7 et 11 du vérin, un capteur de position 19 qui peut naturellement être intégré au vérin 10, mesure la position absolue effective de l'extrémité de la lame flexible 4, représentative de la position absolue effective de la poignée 1 par rapport au châssis (mesure toutefois délivrée des déviations parasites, puisqu'elle se référe dans ce montage à l'extrémité de la lame et non directement à la poignée). Ce capteur 19 ainsi que le capteur 6 communiquent les informations de position au calculateur 18, chargé d'élaborer les consignes de déplacement.

Le fonctionnement du dispositif est le suivant.

L'utilisateur introduit un effort sur la poignée 1.

En raison de l'irréversibilité du vérin 10, l'extrémité de la lame 4 résiste à cet effort, lequel induit donc une déformation (faible) du dispositif élastique constitué par la lame 4. Cette déformation est mesurée par le capteur 6 et transmise au calculateur 18 qui l'interprète en tant qu'effort.

Le calculateur 18 élabore en retour une consigne de position transmise au moteur 17, consigne résultant de la loi effort/déplacement introduite dans le calculateur.

Le vérin 10 entraîne donc un déplacement de la tige 9 conforme à cette loi et aux paramètres dynamiques en mémoire dans le calculateur : accélérations, viscosité, frottement sec, seuils, etc.

Le capteur de position 19 assure le bouclage de l'asservissement en position de la tige 9 au travers du calculateur 18 et de loi effort/déplacement.

Ce déplacement n'entraîne pas de modification de la déformation de la lame 4, et du prolongement rigide 5, cette déformation ne dépendant que de l'effort introduit par l'utilisateur et qui ne varie qu'à l'initiative de celui-ci.

Toute modification de l'effort introduit par l'utilisateur ou de la loi effort/déplacement se traduit instantanément par un mouvement de la poignée 1.

## Revendications

1. Dispositif de commande avec manche de pilotage, la commande s'exerçant par le déplacement du manche (1) selon au moins un degré de liberté, le dispositif comportant un capteur d'effort (4, 6) pour mesurer l'effort exercé par l'utilisateur sur le manche (1), et fournir cette information à un calculateur (18),
des moyens étant prévus pour restituer sur le manche une sensation d'effort s'opposant à l'effort exercé par l'utilisateur, caractérisé en ce que :
* le déplacement du manche (1) est assuré par un actionneur (2, 10) irréversible commandé par le calculateur (18),
* un capteur de position (19) est prévu pour fournir au calculateur (19) une recopie de la position effective du manche (1),
* le calculateur (18) commande le fonctionnement de l'actionneur en position (9, 10) et donc le déplacement du manche (1) et asservit la position du manche à l'effort appliqué en fonction desdites informations d'effort et de position grâce à une loi effort/position introduite dans le calculateur (18).

2. Dispositif selon la revendication 1, caractérisé en ce que le capteur d'effort comporte un dispositif élastique déformable (4) interposé entre le manche (1) et l'actionneur (9, 10), dont on mesure la déformation représentative de l'effort exercé.

3. Dispositif selon la revendication 2, caractérisé en ce que le dispositif élastique est une lame (4) solidaire du manche (1) et son extrémité libre est reliée à l'actionneur (9, 10) par une articulation (7).

4. Dispositif selon l'une quelconque des revendications 2 ou 3, caractérisé en ce qu'il comprend un capteur de déformation de la lame (4) constitué par un capteur (6) de déplacement rigidement solidaire du manche (1) ou de l'actionneur (9, 10).

5. Dispositif selon l'une quelconque des revendications 1 à 4, caractérisé en ce que l'actionneur est un vérin à vis (9, 10).

6. Dispositif selon la revendication 5, caractérisé en ce que le corps (10) et la tige (9) du vérin sont articulés respectivement au châssis et au manche, sur des axes de rotation parallèles (8, 12).

7. Dispositif selon l'une quelconque des revendications 1 à 6, caractérisé en ce que le capteur de position (19) est utilisé pour délivrer le signal de pilotage.

8. Dispositif selon la revendication 7, caractérisé en ce que le capteur (19) de position est placé en parallèle de l'actionneur (9, 10).

9. Dispositif selon l'une quelconque des revendications 1 à 8, caractérisé en ce que le déplacement du manche (1) est un pivotement.

10. Dispositif selon l'une quelconque des revendications 1 à 9, caractérisé en ce que la mesure d'effort peut être utilisée comme signal de pilotage au travers de la loi effort/déplacement, avec le manche immobilisé dans une position quelconque.

## Patentansprüche

1. Steuervorrichtung mit Steuerknüppel zum Steuern der Verschiebung des Steuerknüppels (1) in mindestens einem Freiheitsgrad, mit einem Kraftsensor (4, 6) zum Messen der von dem Bedienenden auf den Steuerknüppel (1) aufgebrachten Kraft und zum Einspeisen dieser Information in einen Rechner (18), wobei Mittel vorgesehen sind, die das Feeling einer der vom Benutzer ausgeübten Kraft entgegenwirkenden Kraftwirkung auf den Steuerknüppel wieder herstellen,
**dadurch gekennzeichnet,** daß
die Verschiebung des Steuerknüppels (1) durch eine irreversible, vom Rechner (18) gesteuerte Betätigungsvorrichtung (9, 10) erfolgt,
ein Positionssensor (19) vorgesehen ist, der an den Rechner (18) eine Wiedergabe der effektiven Position des Steuerknüppels (1) liefert, und
der Rechner (18) das Ansprechen der Betätigungsvorrichtung (9, 10) und damit die Verschiebung des Steuerknüppels (1) steuert und die Position des Steuerknüppels nach der Kraftwirkung, die als Funktion dieser Informationen bezüglich Kraft entsprechend der Position nach einer vom Rechner (18) vorgegebenen Gesetzmäßigkeit zwischen Kraft und Position ausgeübt wird, regelt.

2. Steuervorrichtung nach Anspruch 1, dadurch gekennzeichnet, daß der Kraftsensor (4, 6) eine zwischen Steuerknüppel (1) und Betätigungsvorrichtung (9, 10) angeordnete elastisch nachgiebige Vorrichtung (4) aufweist, deren Deformation entsprechend der ausgeübten Kraft gemessen wird.

3. Steuervorrichtung nach Anspruch 2, dadurch gekennzeichnet, daß die elastisch nachgiebige Vorrichtung eine Feder (4) ist, die mit dem Steuerknüppel (1) kraftschlüssig verbunden ist und deren freies Ende mit der Betätigungsvorrichtung (9, 10) durch ein Gelenk (7) verbunden ist.

4. Steuervorrichtung nach Anspruch 2 oder 3, dadurch gekennzeichnet, daß sie einen die Deformation der Feder (4) feststellenden Sensor aufweist, der durch einen Verschiebesensor (6) kraftschlüssig mit dem Steuerknüppel (1) oder der Betätigungsvorrichtung (9, 10) dargestellt ist.

5. Steuervorrichtung nach einem der Ansprüche 1 - 4, dadurch gekennzeichnet, daß die Betätigungsvorrichtung eine Schraubenwinde (9, 10) ist.

6. Steuervorrichtung nach Anspruch 5, dadurch gekennzeichnet, daß Körper (10) und Schaft (9) der Schraubenwinde gegenüber dem Chassis und dem Steuerknüppel (1) an den parallelen Drehachsen (8, 12) gelagert sind.

7. Steuervorrichtung nach einem der Ansprüche 1 - 6, dadurch gekennzeichnet, daß der Positionssensor (19) zum Erzeugen des Steuersignals dient.

8. Steuervorrichtung nach Anspruch 7, dadurch gekennzeichnet, daß der Positionssensor (19) parallel zur Betätigungsvorrichtung (9, 10) angeordnet ist.

9. Steuervorrichtung nach einem der Ansprüche 1 - 8, dadurch gekennzeichnet, daß die Verschiebung des Steuerknüppels (1) eine Schwenkbewegung ist.

10. Steuervorrichtung nach einem der Ansprüche 1 - 9, dadurch gekennzeichnet, daß die Kraftwirkung als Steuersignal für die Gesetzmäßigkeit zwischen Kraft und Verschiebung verwendbar ist, wobei der Steuerknüppel in einer beliebigen Position starr festgelegt ist.

## Claims

1. A control device having a control stick, wherein the control is applied by displacement of the control stick (1) with at least one degree of freedom, the device comprising a force detector (4, 6) for measuring the force applied by the user to the stick (1), and for supplying this data to a calculator (18), means being provided for reproducing at the stick the feeling of a force reacting against the force applied by the user, characterised in that :
* the displacement of the stick (1) is produced by an irreversible actuator (2, 10) controlled by the calculator (18),
* a position detector (19) is provided for supplying to the calculator (18) a feedback of the actual position of the stick (1),
* the calculator (18) controls the operation of the position actuator (9, 10) and therefore the displacement of the stick (1) and servos the position of the stick to the force applied as a function of said force and position data by means of a force/position law entered in the calculator (18).

2. A device according to claim 1, characterised in that the force detector comprises a deformable elastic device (4) inserted between the stick (1) and the actuator (9, 10), whose deformation is measured as representative of the force applied.

3. A device according to claim 2, characterised in that the elastic device is a leaf spring (4) secured for movement with the stick (1) and its free end is connected to the actuator (9, 10) by a hinged joint (7).

4. A device according to either of claims 2 or 3, characterised in that it comprises a detector for detecting deformation of the leaf spring (4) consisting of a displacement detector (6) which is rigidly fixed for movement with the stick (1) or the actuator (9, 10).

5. A device according to any one of claims 1 to 4, characterised in that the actuator is a screw jack (9, 10).

6. A device according to claim 5, characterised in that the body (10) and the plunger (9) of the jack are hinged respectively on the chassis and on the stick, about parallel axes of rotation (8, 12).

7. A device according to any one of claims 1 to 6, characterised in that the position detector (19) is used to output the control signal.

8. A device according to claim 7, characterised in that the position detector (19) is disposed in parallel with the actuator (9, 10).

9. A device according to any one of claims 1 to 8, characterised in that the displacement of the stick (1) is a pivoting movement.

10. A device according to any one of claims 1 to 9, characterised in that the measurement of force can be used as control signal by means of the force/displacement law, with the stick immobilised in any position.
